(19) Europäisches Patentamt
European Patent Office
Office européen des brevets

(11) Veröffentlichungsnummer: **0 282 737 B1**

(12) **EUROPÄISCHE PATENTSCHRIFT**

(45) Veröffentlichungstag der Patentschrift: **09.06.93**

(51) Int. Cl.5: **C08G 77/22**, C08G 77/26, C08G 77/28

(21) Anmeldenummer: **88102051.5**

(22) Anmeldetag: **12.02.88**

(54) **Acylthioharnstoffgruppen-haltige Organopolysiloxane, Verfahren zu ihrer Herstellung und Verwendung.**

(30) Priorität: **28.02.87 DE 3706523**

(43) Veröffentlichungstag der Anmeldung:
**21.09.88 Patentblatt 88/38**

(45) Bekanntmachung des Hinweises auf die Patenterteilung:
**09.06.93 Patentblatt 93/23**

(84) Benannte Vertragsstaaten:
**AT BE CH DE FR GB IT LI LU NL**

(56) Entgegenhaltungen:
**EP-A- 0 126 934**
**EP-A- 0 169 992**
**DD-A- 212 190**
**FR-A- 2 413 416**
**US-A- 4 455 415**

(73) Patentinhaber: **Degussa Aktiengesellschaft**
**Weissfrauenstrasse 9**
**W-6000 Frankfurt am Main 1(DE)**

(72) Erfinder: **Panster, Peter, Dr.**
**Im Lochseif 8**
**W-6458 Rodenbach(DE)**
Erfinder: **König, Karl-Heinz, Prof. Dr.**
**Kirchhainder Strasse 13**
**W-6000 Frankfurt 50(DE)**
Erfinder: **Schopenhauer-Gehrmann, Elske**
**Berliner Strasse 15**
**W-6236 Eschborn(DE)**
Erfinder: **Kleinschmit, Peter, Dr.**
**Wildaustrasse 19**
**W-6450 Hanau 9(DE)**

EP 0 282 737 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind neue Acylthioharnstoffgruppen-haltige Organopolysiloxane, die zur Entfernung von Edel- und Unedelmetallen aus verdünnten wäßrigen oder organischen Lösungen eingesetzt werden können. Daneben werden auch Verfahren zur Herstellung dieser neuen Produkte beschrieben.

Die Entfernung und Abtrennung von Metallen aus wäßrigen oder organischen Lösungen, die häufig in sehr verdünnter Form vorliegen, stellt in verschiedenen Bereichen der Industrie ein großes Problem dar. Dies beruht teilweise auf völlig unterschiedlichen Gesichtspunkten. Ein Aspekt kann z. B. die Wiedergewinnung von wertvollen Edelmetallen aus Katalyse- oder aus Aufarbeitungsprozessen sein. Einen anderen Gesichtspunkt wiederum stellt die Reinigung z. B. von Lösungen, von Trinkwasser oder Abwasser aus Gründen der Toxikologie oder des Umweltschutzes dar.

Die verschiedenen Gründe, warum die Separierung von Metallen aus Lösungen Interesse findet, kann auch aus der nachstehenden, beispielhaft aufgezählten Literatur ersehen werden:
DE-OS 33 47 406, DD-Patentschriften 207 915, 212 190, 212 257, US-PS 4 448 694, DE-OS 25 22 812, DE-Patentschriften 33 40 055, 33 40 056, EP-OS 0 030 106, US-PS 4 377 555, DE-OS 30 02 883 oder US-PS 3 978 148.

Bei Abtrennung dieser Metalle aus ihren Lösungen werden verschiedene Verfahren praktiziert. Häufig üblich ist einerseits der Einsatz von geeignet modifizierten organischen Polymeren (z. B. DD-Patentschriften 207 915, 212 190, 212 257 oder US-PS 4 448 694) oder andererseits die Verwendung von flüssigen oder gelösten Komplexbildungsagenzien (s. DE-Patentschriften 33 40 055 und 33 40 056, DE-OS 33 47 406). Diese Verfahren sind jedoch nicht ideal. Einerseits sind häufig die verwendeten organischen Polymerträger aufgrund ihrer zu geringen Temperatur- und Lösungsmittelstabilität den Anforderungen nicht gewachsen und andererseits erfordert der Einsatz von flüssigen oder gelösten Komplexbildnern einen teilweise beträchtlichen technischen Aufwand.

Günstiger wäre grundsätzlich die Verwendung geeignet funktionalisierter anorganischer Träger, wie z. B. Kieselgel, die vor allem eine bessere Temperatur- und Lösungsmittelstabilität besitzen. Derartige Systeme wurden auch schon hergestellt und eingesetzt (s. GB-PS 1 532 295), sie leiden jedoch daran, daß diese anorganischen Träger sich nur in relativ begrenztem Umfang funktionalisieren lassen.

Aufgabe der hier vorliegenden Erfindung ist es deshalb, Metalladsorbersysteme auf Basis eines Polymergerüstes mit überwiegend anorganischem Charakter bereitzustellen und dabei gleichzeitig den vorstehend genannten Nachteil der zu geringen Metallionen-Bindungskapazität zu vermeiden.

Weiterhin erschien es besonders sinnvoll, als komplexierende Einheit eine Acylthioharnstoffgruppe zu verwenden, die sich als besonders effektiv erwiesen hat (s. DE-Patentschriften 33 40 055 bzw. 33 40 056 oder DD-PS 212 190).

Diese Aufgabe wurde durch Entwicklung neuer Acylthioharnstoffgruppen-haltiger Organopolysiloxane gelöst, die dadurch gekennzeichnet sind, daß sie Einheiten der Formel (1)

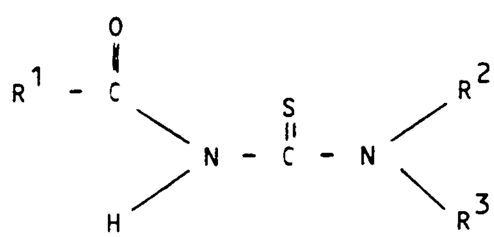

(1)

enthalten, wobei $R^1$ für eine gegebenenfalls mit einer $NO_2$-Gruppe substituierte Phenylgruppe oder eine Alkylgruppe mit 1 bis 3 C-Atomen steht,
$R^2$ und $R^3$ für Einheiten der Formel (2)

$R^4$ - $SiO_{3/2}$ (2)

stehen, in der $R^4$ für eine Alkylengruppe mit 1 bis 10 C-Atomen oder eine Cycloalkylengruppe mit 5 bis 8 C-Atomen oder für Einheiten der Formeln

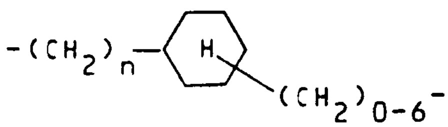 bzw. 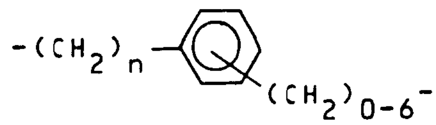

steht, wobei n eine Zahl von 1 bis 6 bedeutet, und die freien Valenzen der Sauerstoffatome in Formel (2) entweder durch Siliciumatome weiterer Gruppen der Formel (2) und/oder durch Siliciumatome von Amineinheiten nach Formel (3)

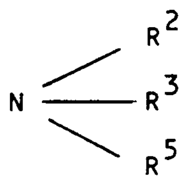 (3)

in der $R^2$ und $R^3$ eine Bedeutung gemäß Formel (2) haben und gleich oder verschieden sein können, $R^5$ für H steht oder dieselbe Bedeutung wie $R^2$ oder $R^3$ hat und/oder durch vernetzende Brückenglieder
$SiO_{4/2}$, $R'SiO_{3/2}$, $R'_2\ SiO_{2/2}$
$TiO_{4/2}$, $R'TiO_{3/2}$, $R'_2\ TiO_{2/2}$
$AlO_{3/2}$, $R'AlO_{2/2}$
abgesättigt sind, wobei R' eine Methyl- oder Ethylgruppe repräsentiert und das Verhältnis der Siliciumatome in Formel (1) und (3) zu den Brückenatomen Silicium, Titan, Aluminium 1 : 0 bis 1 : 10 betragen kann.

$R^4$ kann dabei eine lineare oder verzweigte Alkylengruppe sein.

Eine bevorzugte Zusammensetzung der neuen Acylthioharnstoffgruppen-haltigen Organopolysiloxane sieht vor, daß $R^2$ und $R^3$ miteinander identisch sind. Diese beanspruchten Polymeren zeigen nämlich besondere Stabilität und Unempfindlichkeit gegenüber chemischen Angriffen und zeichnen sich auch durch die höchste Beständigkeit gegenüber Lösungen aus.

Besondere Vorteile bezüglich der Verfügbarkeit der Ausgangsmaterialien und der stofflichen Eigenschaften des Polymeren werden mit Acylthioharnstoffgruppen-haltigen Organopolysiloxanen erreicht, bei denen Formel (1) für Einheiten

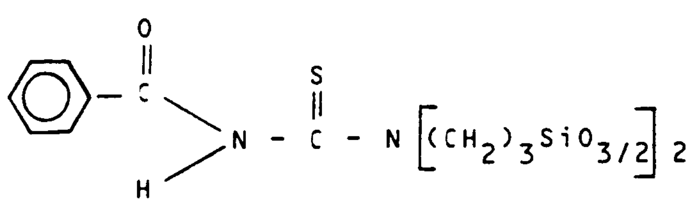

steht.

Die Tatsache, daß im Polymerverband gegebenenfalls sekundäre Amineinheiten nach Formel (3) anwesend sind, resultiert daraus, daß bei der Synthese der erfindungsgemäßen Acylthioharnstoffgruppen-haltigen Organopolysiloxane, wie nachstehend weiter erläutert, von sekundären Aminosilanen oder sekundären Aminosiloxanen ausgegangen werden kann bzw. solche Verbindungen bei der Synthese zugegen sind. Dabei kann, sofern dies für die Eigenschaften des Endprodukts vorteilhaft ist, nur eine Teilumsetzung oder aber auch eine vollständige Umsetzung der sekundären Aminfunktion in die Acylthioharnstoffgruppe erfolgen. Dies kann über die Reaktionsbedingungen gesteuert werden. Durch die Anwesenheit "freier" sekundärer Aminfunktionen im Organopolysiloxan kann Einfluß auf die Eigenschaften beim Einsatz als Adsorber im Hinblick auf Art und Menge der gebundenen Metallionen genommen werden. Entsprechendes gilt auch in bezug auf die Anwesenheit von tertiären Aminfunktionen. Diese werden zwar nicht als Ausgangskomponente benötigt, können aber separat nach allen der nachstehend vorgestellten Herstellungsverfahren für die erfindungsgemäßen Verbindungen in den Polymerverband eingebracht werden und somit neben den Acylthioharnstoffgruppen und gegebenenfalls auch neben den sekundären Aminogruppen im Polymerverband vorliegen. Das molare Verhältnis der im Polymerverband vorhandenen Acylthioharnstoffgruppen gemäß Formel (1) zu den gegebenenfalls vorhandenen sekundären und/oder tertiären Aminogruppen gemäß Formel (3) kann in der Praxis von 1 : 0 bis 1 : 9 betragen.

Der Einbau der vorstehend genannten vernetzenden Si-, Ti-, Al-haltigen Brückenglieder in den Polymerverband dient einer Steuerung der Dichte der Acylthioharnstoffgruppen oder einer Einstellung bestimmter spezifischer Oberflächen oder Oberflächeneigenschaften.

Gegenstand der Erfindung sind auch verschiedene Verfahren zur Herstellung der erfindungsgemäßen Verbindungen. Zwei davon sind dadurch gekennzeichnet, daß ein in der deutschen Patentschrift 31 20 214 beschriebenes Organosiloxanamin, bestehend aus Einheiten der Formel (3)

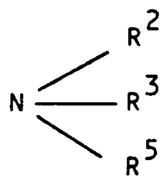

(3)

in der $R^2$ und $R^3$ für Einheiten der Formel (2) stehen, denselben Bedeutungsumfang wie in Formel (2) haben und gleich oder verschieden sein können,
$R^5$ gleich H bedeutet gegebenenfalls in Anwesenheit von Einheiten der Formel (3), bei denen $R^5$ dieselbe Bedeutung wie $R^2$ und $R^3$ haben kann, mit einem Isothiocyanat der Formel (4)

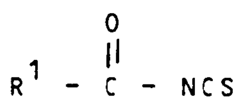

(4)

in der $R^1$ für eine gegebenenfalls mit $NO_2$-Gruppen substituierte Phenylgruppe oder eine Alkylgruppe mit 1 bis 3 C-Atomen steht oder
mit einem Acylchlorid der Formel (5)

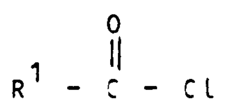

(5)

in der $R^1$ dieselbe Bedeutung wie in Formel (4) hat, und mit Lithium-, Natrium-, Kalium- oder Ammoniumrhodanid in Gegenwart eines organischen Lösungsmittels bei Raumtemperatur oder oberhalb Raumtemperatur bis zu einer Temperatur von 200° C, bei Normaldruck oder einem Überdruck, welcher der Summe der Partialdrucke bei der jeweiligen Temperatur entspricht, umgesetzt wird und dann das Acylthioharnstoffgruppen-haltige Polysiloxan von der flüssigen Phase abgetrennt, mit einem geeigneten Lösungsmittel gewaschen und dann bei einer Temperatur von Raumtemperatur bis 200° C, gegebenenfalls im Vakuum oder unter Schutzgasatomosphäre getrocknet wird. Das polymere Amin der Formel (3) kann sowohl in trockener als auch in lösungsmittelfeuchter Form eingesetzt werden. Für den Fachmann ist sofort verständlich, daß bei der vorstehend beschriebenen Umsetzung natürlich nur die im polymeren Feststoff anwesenden sekundären Amineinheiten nach Formel (3) mit dem Isothiocyanat gemäß Formel (4) (Verfahren I) oder dem Acylchlorid der Formel (5) und Lithium-, Natrium-, Kalium oder Ammoniumrhodanid (Verfahren II) abreagieren, während die gegebenenfalls noch anwesenden tertiären Amineinheiten nach Formel (3) unverändert im Polymer verbleiben.

Diese Umsetzungen können durch die nachstehenden Gleichungen (I) und (II) weiter veranschaulicht werden:

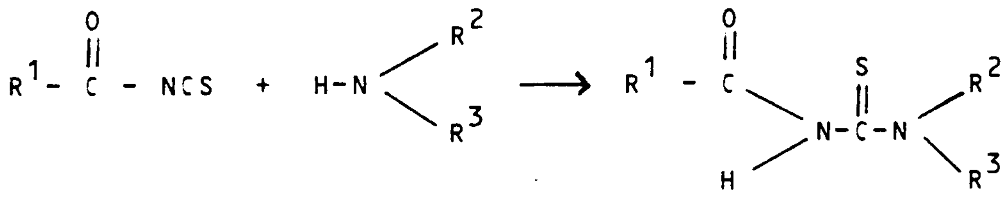

(I)

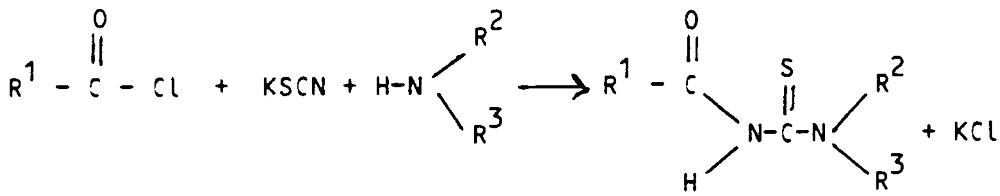

(II)

Für die Umsetzung gemäß Gleichung (I) eignen sich als Lösungsmittel insbesondere niedere Alkohole mit 1 bis 5 C-Atomen, Aceton, Toluol, niedere chlorierte Kohlenwasserstoffe, offenkettige und cyclische Ether oder Ester, wie z. B. Acetessigester, aliphatische oder cycloaliphatische Kohlenwasserstoffe mit 5 bis 8 C-Atomen.

Im Fall der Umsetzung nach Gleichung (II) ist bei der Wahl des Lösungsmittels darauf zu achten, daß keine Nebenreaktion mit der Säurechloridfunktion eintritt. Besonders geeignet ist in diesem Fall Aceton oder auch Tetrahydrofuran oder Dioxan, die natürlich weitgehend wasserfrei sein müssen.

Die Wahl der Stöchiometrie der beiden Reaktionskomponenten in Gleichung (I) hängt davon ab, ob eine vollständige Umsetzung der vorhandenen sekundären Aminfunktionen oder nur eine Teilumsetzung stattfinden soll. Im erstgenannten Fall ist die Verwendung von mindestens stöchiometrischen Mengen an Acylisothiocyanat, bezogen auf die im Polymer vorhandenen sekundären Amineinheiten, erforderlich. Im Hinblick auf eine größere Umsetzungsgeschwindigkeit kann es jedoch auch von Vorteil sein, überschüssige Mengen an Isothiocyanatkomponente einzusetzen. Im Fall einer gewünschten Teilumsetzung der vorhandenen sekundären Amineinheiten kann dies einerseits durch Einsatz unterschüssiger Mengen an Acylisothiocyanat oder andererseits auch über die Reaktionsdauer gesteuert werden. Dies gilt prinzipiell auch für die Umsetzungen gemäß Gleichung (II), wobei sinnvollerweise das molare Verhältnis zwischen der Acylchlorid- und der Rhodanidkomponente stets 1 : 1 beträgt.

Im Fall der Reaktionsgleichung (I) fällt nur ein unlösliches Produkt an, deshalb kann prinzipiell mit jedem der für die Umsetzung geeigneten Lösungsmittel auch nachgewaschen werden, sofern eine Waschung z. B. aufgrund der Schwerflüchtigkeit der im Überschuß eingesetzten Acylkomponente notwendig ist. Gemäß Reaktionsgleichung (II) fällt jedoch noch LiCl, NaCl, KCl oder $NH_4Cl$ neben dem unlöslichen Produkt gemäß Formel (1) an, so daß in diesem Fall gegebenenfalls mit einem gegenüber der Umsetzung verschiedenen Lösungsmittel, z. B. auch mit Wasser, nachgewaschen werden muß.

Nach einem weiteren erfindungsgemäßen Verfahren erfolgt die Herstellung der neuen Verbindungen nach Formel (1) ausgehend von Acylthioharnstoffgruppen-haltigen monomeren Alkoxisilanen, deren Synthese in der DE-OS 37 06 521 beschrieben ist. Dieses Verfahren ist dadurch gekennzeichnet, daß ein Acylthioharnstoffgruppen-haltiges Silan der Formel

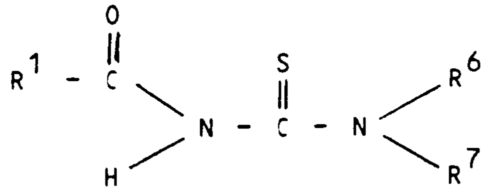

(6)

in der $R^1$ denselben Bedeutungsumfang wie in Formel (1) hat,
$R^6$ und $R^7$ für Einheiten der Formel (7)

$R^4 - Si(OR)_3$ (7)

stehen und gleich oder verschieden sein können, wobei
$R^4$ denselben Bedeutungsumfang wie in Formel (2) hat,
R für einen linearen oder verzweigten Alkylrest mit
1 bis 3 C-Atomen steht, gegebenenfalls in Gegenwart eines sekundären und/oder tertiären Aminosilans der Formel (8)

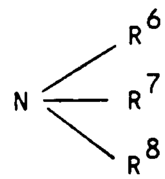

(8)

in der $R^6$ und $R^7$ denselben Bedeutungsumfang wie in Formel (6) haben und gleich oder verschieden sein können,
$R^8$ für H steht oder dieselbe Bedeutung wie $R^6$ oder $R^7$ hat
und/oder gegebenenfalls in Gegenwart einer Vernetzervorstufe der allgemeinen Formel

$$MeR''_{2-4}R'_{0-2} \quad \text{bzw.} \quad MeR''_{2-3}R'_{0-1}$$

wobei Me = Si, Ti bzw. Al
R'' für einen linearen oder verzweigten Alkoxirest mit 1 bis 5 C-Atomen oder für Chlorid steht und R' eine Methyl- oder Ethylgruppe repräsentiert,
gegebenenfalls nach Zusatz eines Lösungsmittels, mit mindestens stöchiometrischen oder überschüssigen Mengen Wasser hydrolysiert und polykondensiert wird, das Produkt gegebenenfalls nach Zusatz weiteren Lösungsmittels von der flüssigen Phase abgetrennt, gegebenenfalls gewaschen, gegebenenfalls unter Schutzgasatmosphäre oder unter Verwendung von Vakuum bis zu einer Temperatur von 200° C über einen Zeitraum von 1 h bis zu mehreren Tagen getrocknet, gegebenenfalls gemahlen und klassifiziert wird.

Die Reihenfolge der einzelnen Maßnahmen bei der Aufarbeitung des Polykondensats kann variiert werden.

Verschiedentlich, z. T. in Abhängigkeit von der Art des verwendeten Lösungsmittels, kann es von Vorteil sein, dem zu polykondensierenden Silan bzw. Silangemisch eine kleine Menge eines Polykondensationskatalysators, z. B. HCl-, $NH_3$- oder NaOH-Lösung, zuzusetzen.

Obwohl die Hydrolyse und Polykondensation grundsätzlich auch ohne Verwendung eines Lösungsmittels durchführbar ist, ist eine Benutzung aus praktischen Gründen vorzuziehen. Als Lösungsmittel für dieses weitere Herstellungsverfahren bieten sich insbesondere die zu den Gruppen R in Formel (7) korrespondierenden linearen oder verzweigten Alkohole mit 1 bis 3 C-Atomen an. Allerdings können auch andere Solvenzien, die keine Reaktion mit den Silan eingehen, wie z. B. Toluol, Xylol, chlorierte Kohlenwasserstoffe, Nitromethan, Nitrobenzol, Aceton, Methylethylketon, Diethylketon, höhere Alkohole, Dialkylether, aliphatische, lineare, verzweigte oder cyclische Kohlenwasserstoffe, Dimethylsulfoxid, Dimethylformamid, verwendet werden.

Bei Zusatz einer Vernetzerstufe ist die zu verwendende Mindestmenge Wasser, d. h. die stöchiometrische Menge entsprechend anzupassen. Natürlich kann die Hydrolyse und Polykondensation nicht nur bei Normaldruck, sondern auch unter Unterdruck oder unter Überdruck durchgeführt werden.

Die Abtrennung des Produkts von der flüssigen Phase kann nach gängigen Techniken, entweder durch Abdestillation der Flüssigkeit oder durch Abfiltrieren oder Abzentrifugieren des Feststoffs erfolgen.

Die erfindungsgemäßen Acylthioharnstoffgruppen-haltigen Organopolysiloxane besitzen je nach Ausgangsmaterial, verwendeten Polykondensationsmedium und Polykondensationsbedingungen spezifische Oberflächen von weniger als 1 $m^2/g$ bis zu 1000 $m^2/g$. Die Teilchengrößen können innerhalb bestimmter Bereiche durch Mahlen eingestellt werden; sie liegen zwischen ca. 0,1 $\mu m$ bis zu 1 cm.

Ein Gegenstand der Erfindung ist auch die Verwendung der neuen Acylthioharnstoffgruppen-haltigen Organopolysiloxane zur Entfernung von gelösten Metallen aus wäßrigen oder organischen Lösungen. Die Konzentration der Metalle in den wäßrigen oder organischen Lösungen kann dabei sowohl im Bereich

mehrerer Prozente als auch im ppm- oder sogar ppb-Bereich liegen. Bei den abzutrennenden Metallen handelt es sich einerseits um wertvolle Edelmetalle und andererseits um Schwermetalle, deren Entfernung unter dem Aspekt des Umweltschutzes stehen kann.

Das Acylthioharnstoffgruppen-haltige Organopolysiloxan kann dabei einerseits in feinteiliger Form in einer gerührten Suspension oder andererseits auch in etwas grobkörniger Form in einem Festbett eingesetzt werden.

Dabei können Temperaturen von Raumtemperatur bis 200° C und Drucke von Normaldruck bis zu einem Überdruck, welcher der Summe der Partialdrucke bei der jeweiligen Temperatur entspricht, angewendet werden.

Die metallbeladenen Produkte lassen sich mit Thioharnstoff regenerieren.

Die Erfindung wird nachfolgend anhand von Ausführungsbeispielen weiter erläutert.

Beispiel 1

In einem 6 l-Dreihalskolben mit KPG-Rührer, Innenthermometer und Rückflußkühler wurden 149,6 g eines sekundären polymeren Amins, bestehend aus Einheiten der Formel $HN[(CH_2)_3SiO_{3/2}]_2$, in 1,5 l getrocknetem Aceton suspendiert. Die Suspension wurde bei Raumtemperatur auf einmal mit 143,0 g KSCN und 206,8 g Benzoylchlorid versetzt und dann innerhalb 1 h auf Rückflußtemperatur (60° C) aufgeheizt. Die Suspension wurde insgesamt 16 h bei Rückflußtemperatur gerührt, wobei sich der Feststoff intensiv orange färbte und die flüssige Phase viskoser wurde. Die Suspension wurde über ein Druckfilter abfiltriert und der auf dem Filter verbleibende Feststoff zunächst mit Aceton gewaschen, bis das Filtrat farblos war. Dann wurde der Feststoff mit insgesamt 5 l entsalztem Wasser gewaschen. Das Produkt wurde dann zunächst 8 h bei 50° C und anschließend 24 h bei 120° C getrocknet. Die Produktauswaage betrug 251 g und eine durchgeführte elementaranalytische Untersuchung ergab folgende Werte:

| % C | % H | % N | % S |
|---|---|---|---|
| 44,6 | 5,21 | 6,90 | 7,99 |

Für das erhaltene Benzoylthioharnstoffgruppen-haltige Organopolysiloxan, im Idealfall vollständig aus Einheiten der Formel

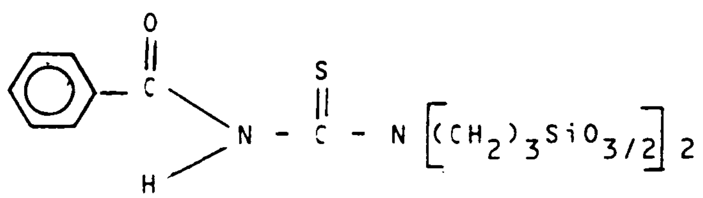

bestehend, waren folgende Analysendaten zu erwarten:

| % C | % H | % N | % S |
|---|---|---|---|
| 45,88 | 4,95 | 7,64 | 8,74 |

Anhand des gefundenen S-Gehaltes des Polymeren und auch anhand der anderen Analysenwerte kann ersehen werden, daß eine über 90 %ige Umwandlung der vorhandenen sekundären Amineinheiten in Acylthioharnstoffgruppen stattgefunden hat.

Beispiel 2

62,8 g eines polymeren Organosiloxanamins, bestehend zu 30 Mol % aus Einheiten der Formel $N[(CH_2)_3SiO_{3/2}]_3$ und zu 70 Mol % aus Einheiten der Formel $HN[(CH_2)_3SiO_{3/2}]_2$ sowie 60,0 g KSCN wurden in 700 ml trockenem Aceton vereinigt. Die Suspension wurde in einen 2 l-Kolben mit KPG-Rührer, Rückflußkühler und Innenthermometer überführt. Nach Zugabe von 86,8 g Benzoylchlorid wurde auf Rückflußtemperatur aufgeheizt und 8 h gerührt. Anschließend wurde abgekühlt, weitere 200 ml Aceton zugesetzt und der Feststoff über ein Druckfilter abfiltriert. Nach dem Waschen mit 1 l Aceton und 1 l Wasser wurde der orangefarbene Feststoff 20 h bei 100° C/80 mbar getrocknet.

Es wurden 88 g Produkt mit einem Schwefelgehalt von 5,17 % erhalten. Dieser Wert zeigt an, daß rund 80 % aller ursprünglich vorhandenen sekundären Amineinheiten in Acylthioharnstoffgruppen der Formel

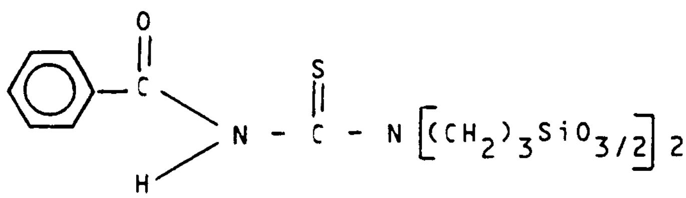

umgewandelt wurden.

Beispiel 3

400 g eines Organopolysiloxanamins, bestehend zu 60 Mol % aus Einheiten der Formel $HN[(CH_2)_3SiO_{3/2}]_2$ und zu 40 Mol % aus Einheiten der Formel $N[(CH_2)_3SiO_{3/2}]_3$ wurden in 4 l Aceton suspendiert. Die Suspension wurde mit 410 g Benzoylisothiocyanat versetzt, auf Rückflußtemperatur aufgeheizt und 12 h unter Rückfluß gerührt. Danach wurde der Feststoff abfiltriert und mit 3 l Aceton gewaschen. Nach 8-stündiger Trocknung bei 100° C/100 mbar wurden 509 g Produkt mit einem Schwefelgehalt von 4,90 % erhalten, was einer über 85 %igen Umsetzung der vorhandenen sekundären Amineinheiten entspricht.

Beispiel 4

Ausgehend von 294,0 g eines polymeren Organosiloxanamins, bestehend aus Einheiten der Formel $HN[(CH_2)_3SiO_{3/2}]_2 \cdot SiO_2$, 108 g KSCN und 130 g Benzoylchlorid wurden in 2 l Aceton, nach 15 h Reaktionszeit analog zu Beispiel 1 ein Acylthioharnstoffgruppen-haltiges Polysiloxan (355,0 g) mit folgenden Analysenwerten erhalten:

| % C | % H | % N | % S | % Si |
|---|---|---|---|---|
| 37,95 | 4,65 | 5,35 | 3,30 | 21,15 |

Bei vollständiger Umsetzung aller vorhandenen sekundären Amineinheiten im Polymer waren folgende Analysenwerte zu erwarten gewesen:

| % C | % H | % N | % S | % Si |
|---|---|---|---|---|
| 39,41 | 4,25 | 6,57 | 7,51 | 19,75 |

Beispiel 5

32,6 g eines polymeren Organosiloxanamins, bestehend zu 30 Mol % aus Einheiten der Formel $N[-(CH_2)_{10}SiO_{3/2}]_3$ und zu 70 Mol % aus Einheiten der Formel $HN[(CH_2)_{10}SiO_{3/2}]_2$ sowie 20,0 g KSCN wurden in 330 ml Aceton vereinigt. Die Suspension wurde in einen 1 l-Kolben mit KPG-Rührer, Rückflußkühler und Innenthermometer überführt. Nach Zugabe von 29,0 g Benzoylchlorid wurde auf Rückflußtemperatur aufgeheizt und 15 h gerührt. Nach weiterer Aufarbeitung analog zu Beispiel 2 wurden 39,6 g Produkt mit einem Schwefelgehalt von 3,32 % erhalten.

Beispiel 6

30,0 g eines polymeren Organosiloxanamins, bestehend aus Einheiten der Formel

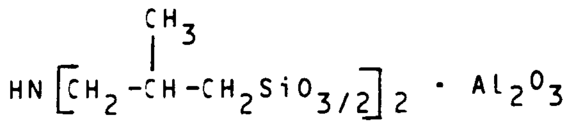

wurden analog zu Beispiel 5 mit 40 g

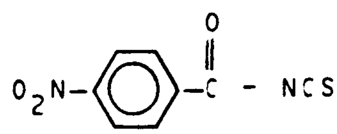

in 300 ml Aceton innerhalb von 10 h umgesetzt. Nach weiterer Aufarbeitung analog zu Beispiel 2 wurden 38,6 g Produkt mit einem Schwefelgehalt von 4,58 % erhalten.

Beispiel 7

25 g eines polymeren Organosiloxanamins, bestehend aus Einheiten der Formel

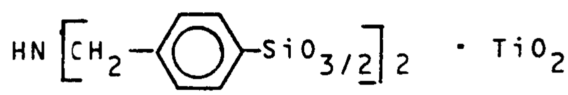

wurden analog zu Beispiel 5 mit 40 g Benzoylisothiocyanat innerhalb von 16 h in 300 ml i-Propanol umgesetzt. Nach weiterer Aufarbeitung analog zu Beispiel 3 wurden 32,4 g polymeres Produkt mit einem Schwefelgehalt von 5,6 % und damit überwiegend (über 80 %) aus Einheiten der Formel

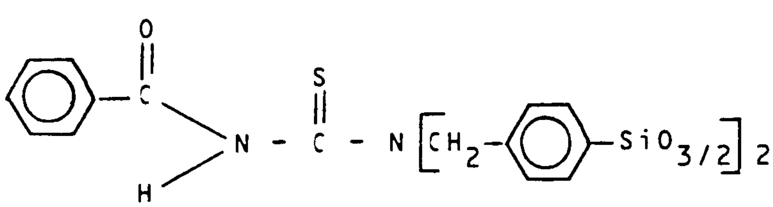

bestehend, erhalten.

Beispiel 8

30 g eines polymeren Organosiloxanamins, bestehend aus Einheiten der Formel

$NH[(CH_2)_3SiO_{3/2}]_2 \cdot (CH_3)_2SiO_{2/2}$

wurden analog zu Beispiel 1 mit 21,0 g KSCN und 17,0 g Acetylchlorid in 300 ml Aceton umgesetzt.

Nach weiterer Aufarbeitung analog zu Beispiel 1 wurden 37,6 g Produkt, bestehend zu über 85 % aus Einheiten der Formel

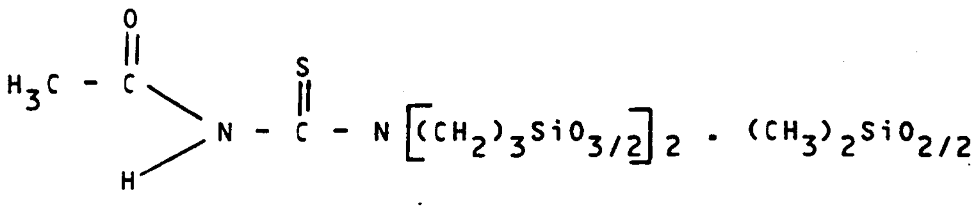

und einem Schwefelgehalt von 7,1 % erhalten.

Beispiel 9

191,1 g eines polymeren sekundären Organosiloxanamins, bestehend aus Einheiten der Formel $HN[-(CH_2)_3SiO_{3/2}]_2$ wurden in 1 l Ethanol suspendiert. Die Suspension wurde unter Rühren bei Raumtemperatur binnen 15 min. mit 306,7 g Benzoylisothiocyanat versetzt und anschließend 5 h unter Rückfluß gerührt. Nach dem Waschen mit 2 l Ethanol und 4-stündiger Trocknung bei 50° C sowie 16-stündiger Trocknung bei 100° C unter $N_2$-Atmosphäre wurden 298,1 g Produkt mit einem Schwefelgehalt von 6,45 % erhalten. Dies entspricht einer über 70 %igen Umwandlung der vorhandenen sekundären Amineinheiten in Einheiten der Formel

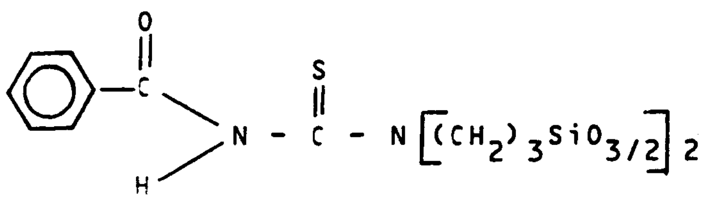

Eine durchgeführte Bestimmung der spezifischen Oberfläche des Produkts mit dem Areameter ergab einen Wert von 398 $m^2/g$.

Beispiel 10

100 g eines Gemisches bestehend zu 70 Mol % aus einem Acylthioharnstoffgruppen-haltigen Silan der Formel

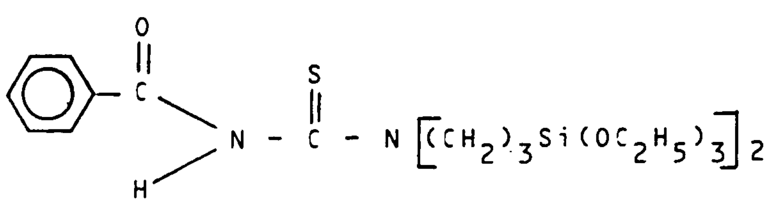

und zu 20 Mol % aus einem tertiären Aminosilan der Formel

$N[(CH_2)_3Si(OC_2H_5)_3]_3$

wurden in 100 ml Ethanol gelöst. Die Lösung wurde in einen 1 l 3-Halskolben mit KPG-Rührer, Rückflußkühler und Tropftrichter überführt und unter Rühren auf 80° C erwärmt. Nach dem Erreichen dieser Temperatur wurden zu der Mischung 25 g entsalztes Wasser auf einmal zugesetzt. Nach kurzer Zeit gelierte die Mischung vollständig durch und es wurden noch 300 ml entsalztes Wasser zugegeben. Der sich ausbildende Feststoff wurde noch 1,5 h bei Rückflußtemperatur gerührt, dann abgekühlt, abzentrifugiert

und 2 x mit je 250 ml Ethanol gewaschen. Nach 20-stündiger Trocknung bei 100° C unter $N_2$-Atmosphäre wurden 55,4 g Produkt mit einem Schwefelgehalt von 5,95 % erhalten. Damit bestand das erhaltene polymere Produkt zu fast 80 Mol % aus Einheiten der Formel

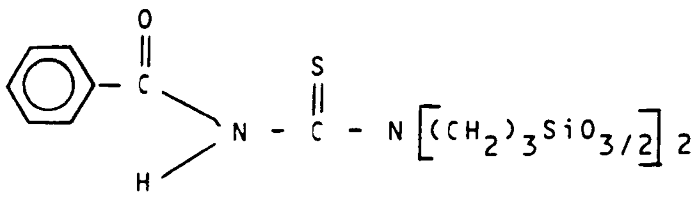

und zu rund 20 Mol % aus Einheiten der Formel

$N[(CH_2)_3SiO_{3/2}]_3$.

Beispiel 11

100 g eines Gemisches, bestehend zu 60 Mol % aus einem Acylthioharnstoffgruppen-haltigen Silan der Formel

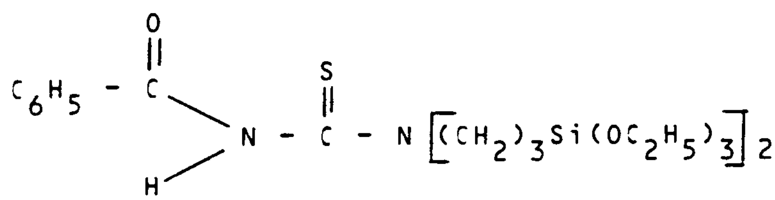

zu 30 Mol % aus einem sekundären Aminosilan der Formel $NH[(CH_2)_3Si(OC_2H_5)_3]_2$ und zu 10 Mol % aus $Si(OC_2H_5)_4$ wurden analog zu Beispiel 10 umgesetzt und aufgearbeitet. Es wurden 54,8 g orangefarbenes Produkt mit einem Schwefelgehalt von 5,40 % erhalten.

Der polymere Feststoff besaß damit angenähert die Zusammensetzung

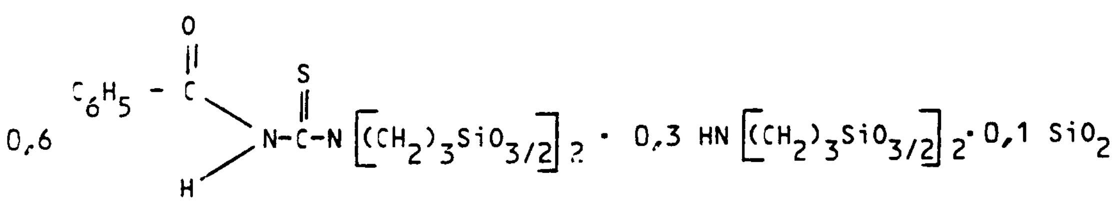

Beispiel 12

100 mg des nach Beispiel 3 hergestellten Acylthioharnstoffgruppen-haltigen Organopolysiloxans wurden in einem Becherglas mit einer Lösung von 10 ml 0,1 n $HNO_3$, in der insgesamt 10 mg Silber gelöst waren, versetzt. Der Feststoff wurde insgesamt 3 h in der Lösung gerührt, dann abfiltriert und mit 2 x 5 ml $H_2O$ gewaschen.

Eine Analyse des mit der Waschlösung vereinigten Filtrats ergab keinen Gehalt an Silber mehr, so daß die ursprünglich vorhandene Menge vollständig von dem Polysiloxan adsorbiert worden war.

Beispiel 13

Das Komplexierungsvermögen der Acylthioharnstoffgruppen-haltigen Organopolysiloxane wird auch durch einen sehr hohen Fremdionenanteil nicht beeinflußt.

500 mg des nach Beispiel 1 hergestellten Benzoylthioharnstoffgruppen-haltigen Organopolysiloxans wurden mit 20 ml 0,1 n Salzsäure versetzt. Die Suspension wurde nach vollständiger Benetzung des Feststoffs in eine kleine Glassäule mit einem Innendurchmesser von 5 mm überführt. Die Glassäule wurde anschließend innerhalb von 30 min. zunächst mit 10 ml einer 0,1 n HCl-Lösung beschickt, in der insgesamt 100 µg Palladium und 5 mg Kobalt enthalten waren. Dann wurden wiederum innerhalb von 30 min. 10 ml einer 0,1 n HCl-Lösung, enthaltend 100 µg Palladium und 2 mg Nickel, über die Säule geschickt. Nach dem Waschen der Säule mit 20 ml 0,1 n-HCl-Lösung wurde die vereinigte Wasch- und Eluatlösung auf ihren Gehalt an Edelmetall und Unedelmetall hin untersucht: Palladium ist demnach vollständig an die stationäre Phase gebunden worden, während sich Kobalt und Nickel quantitativ in der flüssigen Phase befanden.

Beispiel 14

100 mg des nach Beispiel 3 hergestellten Acylthioharnstoffgruppen-haltigen Organopolysiloxans wurden in einem Becherglas mit 10 ml 0,1 n HCl-Lösung, in der insgesamt 1 mg Ruthenium gelöst waren, versetzt. Der Feststoff wurde insgesamt 3 h bei 75° C in der Lösung gerührt. Nach dem Abfiltrieren und dem Waschen des auf dem Filter verbliebenen Feststoffs mit 2 x 5 ml $H_2O$ ergab eine analytische Untersuchung der vereinigten Lösungen, daß 90 % des ursprünglich in der Lösung vorhandenen Rutheniums vom Feststoff adsorbiert worden waren.

Beispiel 15

Die besonders gute Adsorption von Edelmetallen läßt sich auch für die Abtrennung von kleinen Anteilen Palladium oder Platin aus uranhaltigen Lösungen nutzen.

Unter diesem Aspekt wurden 500 mg des in Beispiel 9 synthetisierten Adsorbers analog zu Beispiel 13 mit jeweils 10 ml einer 0,1 n Salzsäurelösung, enthaltend jeweils

| | |
|---|---|
| 5 mg Uran, | 500 µg Palladium |
| 5 mg Uran, | 80 µg Palladium |
| 5 mg Uran, | 125 µg Platin |
| 12,5 mg Uran, | 125 µg Platin |

beschickt. Eine Analyse der jeweiligen Eluate ergab eine vollständige Adsorption der Edelmetalle, während Uran zu 100 % im Eluat verblieben war.

Beispiel 16

50 mg eines analog zu Beispiel 9, allerdings in Aceton, hergestellten Adsorbers wurden 2 h mit 5 ml einer 0,01 molaren $HNO_3$-Lösung, die 50 µg Quecksilber enthielt, in einer Schüttelapparatur geschüttelt. Eine anschließend durchgeführte Analyse ergab eine vollständige Adsorption des vorher gelösten Quecksilbers.

Beispiel 17

Jeweils 3 g des in Beispiel 10 hergestellten Adsorbers wurden in einem Becherglas bei 60° C, eine Stunde lang, in 50 ml einer salzsauren Lösung (1 n), in der jeweils 50 mg Rhodium bzw. 50 mg Iridium bzw. 50 mg Gold enthalten waren, gerührt. Nach dieser Zeit wurde in den 3 vom Feststoff abgetrennten Lösungen jeweils der Restanteil an ursprünglich vorhandenem Edelmetall bestimmt. Dieser betrug für

| | |
|---|---|
| Rhodium | 2 % |
| Iridium | 2 % |
| Gold | < 5 %. |

Beispiel 18

Die Wiederholung des in Beispiel 17 beschriebenen Versuches unter Einsatz einer salzsauren ethanolischen Lösung der genannten Metalle erbrachte praktisch dieselben Ergebnisse.

**Patentansprüche**

1. Acylthioharnstoffgruppen-haltige Organopolysiloxane, aufgebaut aus Einheiten der Formel

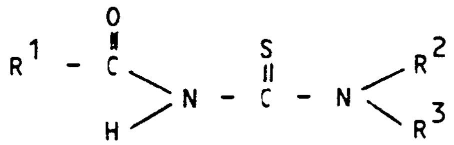 (1),

wobei $R^1$ eine Phenyl- oder für eine mit einer $NO_2$-Gruppe substituierte Phenylgruppe oder eine Alkylgruppe mit 1 bis 3 C-Atomen steht,
$R^2$ und $R^3$ für Einheiten der Formel

$R^4$ - $SiO_{3/2}$ (2)

stehen, in der $R^4$ eine Alkylengruppe mit 1 bis 10 C-Atomen oder eine Cycloalkylengruppe mit 5 bis 8 C-Atomen oder Einheiten der Formeln

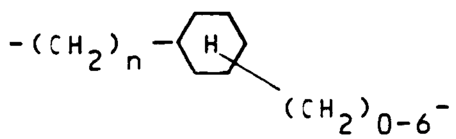 bzw. 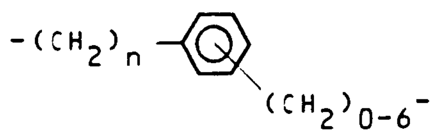

bedeutet, wobei n eine Zahl von 1 bis 6 sein kann, und die freien Valenzen der Sauerstoffatome in Formel (2) entweder durch Siliciumatome weiterer Gruppen der Formel (2) und/oder durch Siliciumatome von Amineinheiten nach Formel

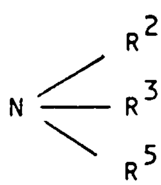 (3)

in der $R^2$ und $R^3$ eine Bedeutung gemäß Formel (2) haben und gleich oder verschieden sein können,
$R^5$ für H steht oder dieselbe Bedeutung wie $R^2$ oder
$R^3$ hat, und/oder durch vernetzende Brückenglieder
$SiO_{4/2}$, $R'SiO_{3/2}$, $R'_2SiO_{2/2}$
$TiO_{4/2}$, $R'TiO_{3/2}$, $R'_2TiO_{2/2}$
$AlO_{3/2}$, $R'AlO_{2/2}$
abgesättigt sind, wobei R' eine Methyl- oder Ethylgruppe repräsentiert und das Verhältnis der Siliciumatome in Formel (1) und (3) zu den Brückenatomen Silicium, Titan, Aluminium 1 : 0 bis 1 : 10 beträgt.

2. Acylthioharnstoffgruppen-haltige Organopolysiloxane gemäß Anspruch 1,
**dadurch gekennzeichnet**,
daß $R^4$ eine lineare oder verzweigte Alkylengruppe ist.

3. Acylthioharnstoffgruppen-haltige Organopolysiloxane gemäß Anspruch 1 oder 2,
**dadurch gekennzeichnet**,
daß Formel (1) für Einheiten

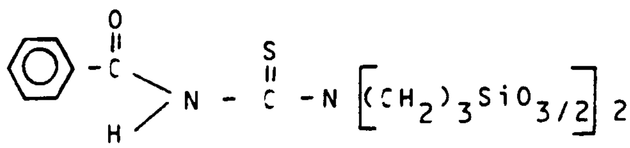

steht.

4. Acylthioharnstoffgruppen-haltige Polysiloxane gemäß Ansprüchen 1 bis 3,
**dadurch gekennzeichnet**,
daß das molare Verhältnis zwischen Einheiten der Formel (1) zu Einheiten der Formel (3) 1 : 0 bis 1 : 9 betragen kann.

5. Verfahren zur Herstellung der erfindungsgemäßen Verbindungen gemäß Ansprüchen 1 bis 4,
**dadurch gekennzeichnet**,
daß ein polymeres Organosiloxanamin, bestehend aus Einheiten der Formel

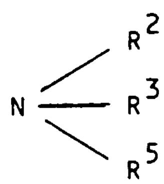 (3),

in der $R^2$ und $R^3$ für Einheiten der Formel (2) stehen, denselben Bedeutungsumfang wie in Formel (2) haben und gleich oder verschieden sein können,
$R^5$ gleich H bedeutet, gegebenenfalls in Anwesenheit von Einheiten der Formel (3), bei denen $R^5$ dieselbe Bedeutung wie $R^2$ und $R^3$ haben kann, mit einem Isothiocyanat der Formel

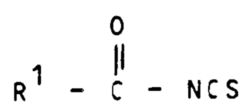 (4),

in der $R^1$ für eine Phenyl- oder für eine mit einer $NO_2$-Gruppe substituierte Phenylgruppe oder eine Alkylgruppe mit 1 bis 3 C-Atomen steht, in Gegenwart eines organischen Lösungsmittels bei Raumtemperatur oder oberhalb Raumtemperatur bis zu einer Temperatur von 200° C, bei Normaldruck oder einem Überdruck, welcher der Summe der Partialdrucke bei der jeweiligen Temperatur entspricht, umgesetzt wird und das Acylthioharnstoffgruppen-haltige Polysiloxan von der flüssigen Phase abgetrennt, mit einem geeigneten Lösungsmittel gewaschen und dann bei einer Temperatur von Raumtemperatur bis 200° C, an der Luft oder unter Schutzgasatmosphäre oder im Vakuum getrocknet wird.

6. Verfahren gemäß Anspruch 5,
**dadurch gekennzeichnet**,
daß bei der Umsetzung mit dem Isothiocyanat gemäß Formel (4) als Lösungsmittel niedere Alkohole mit 1 bis 5 C-Atomen oder Aceton verwendet werden.

7. Verfahren zur Herstellung der Verbindungen gemäß den Ansprüchen 1 bis 4,
**dadurch gekennzeichnet**,
daß ein polymeres Organosiloxanamin, bestehend aus Einheiten der Formel (3) mit einem Acylchlorid der Formel

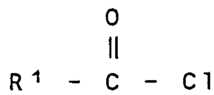 (5),

in der $R^1$ dieselbe Bedeutung wie in Formel (4) hat, und mit Lithium-, Natrium-, Kalium- oder Ammoniumrhodanid umgesetzt wird.

**8.** Verfahren gemäß Anspruch 7,
**dadurch gekennzeichnet**,
daß bei der Umsetzung als Lösungsmittel Aceton verwendet wird.

**9.** Verfahren zur Herstellung der erfindungsgemäßen Verbindungen gemäß Ansprüchen 1 bis 4,
**dadurch gekennzeichnet**,
daß ein Acylthioharnstoffgruppen-haltiges Silan der Formel

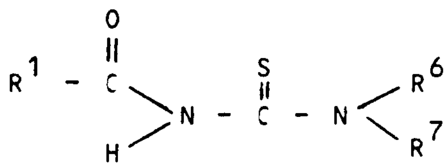 (6),

in der $R^1$ denselben Bedeutungsumfang wie in Formel (1) hat,
$R^6$ und $R^7$ für Einheiten der Formel

$R^4 - Si(OR)_3$ (7)

stehen und gleich oder verschieden sein können,
wobei $R^4$ denselben Bedeutungsumfang wie in Formel (2) hat, R für einen linearen oder verzweigten Alkylrest mit 1 bis 3 C-Atomen steht, gegebenenfalls in Gegenwart eines sekundären und/oder tertiären Aminosilans der Formel

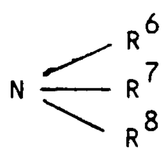 (8),

in der $R^6$ und $R^7$ denselben Bedeutungsumfang wie in Formel (6) haben und gleich oder verschieden sein können,
$R^8$ für H steht und/oder dieselbe Bedeutung wie $R^6$ oder $R^7$ hat,
und/oder gegebenenfalls in Gegenwart einer Vernetzervorstufe der allgemeinen Formel

$MeR''_{2-4}R'_{0-2}$ bzw. $MeR''_{2-3}R'_{0-1}$

wobei Me = Si, Ti bzw. Al
R'' für einen linearen oder verzweigten Alkoxirest mit 1 bis 5 C-Atomen oder für Chlorid steht und R' eine Methyl- oder Ethylgruppe repräsentiert,
gegebenenfalls nach Zusatz eines Lösungsmittels, mit mindestens stöchiometrischen oder überschüssigen Mengen Wasser hydrolysiert und polykondensiert wird, das Produkt gegebenenfalls nach Zusatz weiteren Lösungsmittels von der flüssigen Phase abgetrennt, gegebenenfalls gewaschen, unter Schutzgasatmosphäre oder an der Luft oder im Vakuum bis zu einer Temperatur von 200° C über einen

Zeitraum von 1 h bis zu mehreren Tagen getrocknet wird.

**10.** Verfahren gemäß Anspruch 9,
**dadurch gekennzeichnet**,
daß als Lösungsmittel lineare oder verzweigte Alkohole mit 1 bis 3 C-Atomen verwendet werden.

**11.** Verwendung der Acylthioharnstoffgruppen-haltigen Organopolysiloxane zur Abtrennung von gelösten Metallen aus wäßrigen und organischen Lösungen.

## Claims

**1.** Organopolysiloxanes which contain acylthiourea groups, built up from units of the formula,

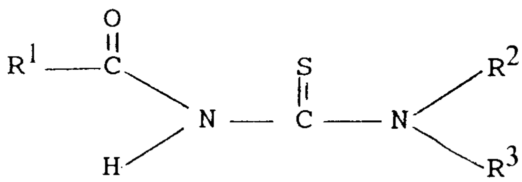

(1),

wherein $R^1$ represents a phenyl group or a phenyl group substituted with an $NO_2$ group or an alkyl group with 1 to 3 carbon atoms,
$R^2$ and $R^3$ represent units of the formula

$R^4 - SiO_{3/2}$ (2)

in which $R^4$ is an alkene group with 1 to 10 carbon atoms or a cycloalkene group with 5 to 8 carbon atoms or units of the formulas

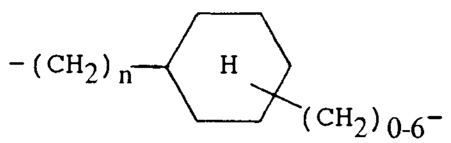

or

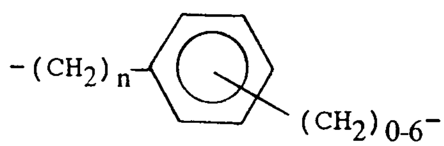

wherein n may be a number from 1 to 6, and the free valencies of the oxygen atom in formula (2) are saturated either by silicon atoms from other groups of the formula (2) and/or by silicon atoms from amine units of the formula

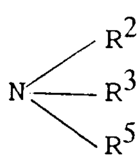

(3)

in which $R^2$ and $R^3$ are as defined in formula (2) and may be identical or different, $R^5$ represents H or is defined as $R^2$ or $R^3$, and/or by cross-linking bridge members
$SiO_{4/2}$, $R'SiO_{3/2}$, $R'_2SiO_{2/2}$
$TiO_{4/2}$, $R'TiO_{3/2}$, $R'_2TiO_{2/2}$
$AlO_{3/2}$, $R'AlO_{2/2}$
wherein R' represents a methyl or ethyl group and the ratio of the silicon atoms in formula (1) and (3) to the bridging silicon, titanium or aluminium atoms is 1:0 to 1:10.

**2.** Organopolysiloxanes which contain acylthiourea groups according to Claim 1, characterised in that $R^4$ is a linear or branched alkene group.

3. Organopolysiloxanes which contain acylthiourea groups according to Claim 1 or 2, characterised in that formula (1) represents

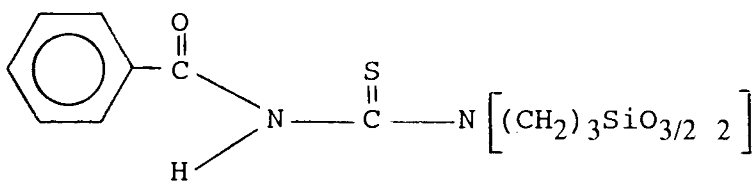

units.

4. Polysiloxanes which contain acylthiourea groups according to Claims 1 to 3, characterised in that the molar ratio between units of the formula (1) to units of the formula (3) may be 1:0 to 1:9.

5. A process for the preparation of the compounds according to the invention, according to Claims 1 to 4, characterised in that a polymeric organosiloxanamine, consisting of units of the formula

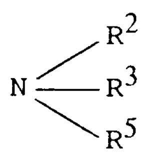

(3)

in which $R^2$ and $R^3$ represent units of the formula (2), are defined as in formula (2) and may be identical or different,
$R^5$ is H, optionally in the presence of units of the formula (3), in which $R^5$ is defined as $R^2$ and $R^3$, is reacted with an isothiocyanate of the formula

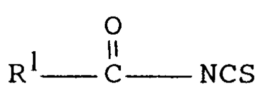

(4)

in which $R^1$ represents a phenyl group or a phenyl group substituted with an $NO_2$ group or an alkyl group with 1 to 3 carbon atoms, in the presence of an organic solvent at room temperature or above room temperature up to a temperature of 200 ° C, at atmospheric pressure or under an excess pressure which corresponds to the sum of the partial pressures at the particular temperature, and the polysiloxane which contains acylthiourea groups is separated from the liquid phase, washed with a suitable solvent and then dried at a temperature from room temperature to 200 ° C, in the air or under a protective atmosphere or under vacuum.

6. A process according to Claim 5, characterised in that lower alcohols with 1 to 5 carbon atoms or acetone are used as solvent during reaction with the isothiocyanate according to formula (4).

7. A process for the preparation of compounds according to Claims 1 to 4, characterised in that a polymeric organosiloxanamine, consisting of units of the formula (3) is reacted with an acyl chloride of the formula

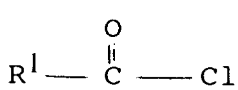

(5)

in which $R^1$ is as defined in formula (4), and with lithium, sodium, potassium or ammonium thiocyanate.

**8.** A process according to Claim 7, characterised in that acetone is used as solvent during the reaction.

**9.** A process for the preparation of compounds according to the invention, according to Claims 1 to 4, characterised in that a silane which contains acylthiourea groups of the formula

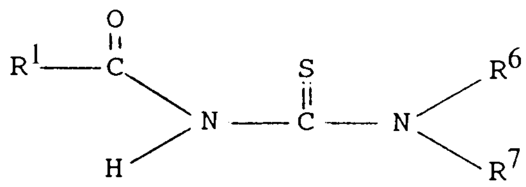

(6),

in which $R^1$ is as defined in formula (1), $R^6$ and $R^7$ represent units of the formula

$R^4$ - $Si(OR)_3$ (7)

and may be identical or different,
wherein $R^4$ is as defined in formula (2), R represents a linear or branched alkyl group with 1 to 3 carbon atoms, optionally in the presence of a secondary and/or tertiary aminosilane of the formula

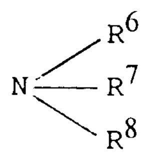

(8)

in which $R^6$ and $R^7$ are as defined in formula (6) and may be identical or different,
$R^8$ represents H and/or is defined as $R^6$ or $R^7$,
and/or optionally in the presence of a cross-linking agent precursor of the general formula

$MeR''_{2-4}R'_{0-2}$ or $MeR''_{2-3}R'_{0-1}$

wherein Me = Si, Ti or Al,
R'' represents a linear or branched alkoxy group with 1 to 5 carbon atoms or chloride and R' represents a methyl or ethyl group,
optionally after the addition of a solvent, is hydrolysed with at least stoichiometric or excess amounts of water, the product is separated from the liquid phase, optionally after the addition of further solvent, optionally washed and is dried under a protective atmosphere or in air or under vacuum up to a temperature of 200 °C over a period from 1 hour to several days.

**10.** A process according to Claim 9, characterised in that linear or branched alcohols with 1 to 3 carbon atoms are used as solvent.

**11.** Use of the organopolysiloxanes which contain acylthiourea groups to separate dissolved metals from aqueous and organic solutions.

## Revendications

**1.** Organopolysiloxanes contenant des groupes acyle-thiourée, constitués de motifs de formule

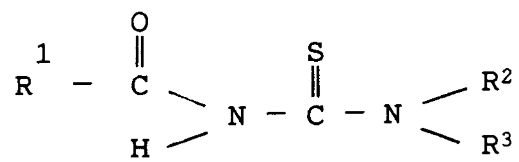

(1)

dans laquelle $R^1$ représente un groupe phényle ou un groupe phényle substitué par un radical $NO_2$, ou un groupe alkyle ayant de 1 à 3 atomes de carbone, $R^2$ et $R^3$ représentent des motifs de formule

$R^4$- $SiO_{3/2}$ (2)

dans laquelle $R^4$ représente un groupe alkylène ayant de 1 à 10 atomes de carbone, ou un groupe cycloalkylène ayant de 5 à 8 atomes de carbone, ou des motifs de formule

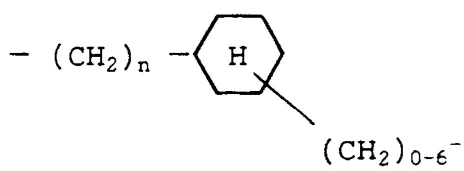

bzw.

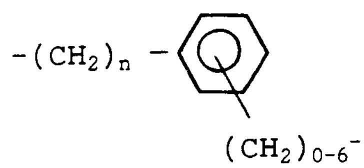

n pouvant être un nombre valant de 1 à 6, et les valences libres des atomes d'oxygène dans la formule (2) sont saturées soit par des atomes de silicium d'autres groupes de formule (2) et/ou par des atomes de silicium de motifs amine de formule

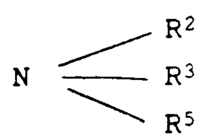

(3)

dans laquelle $R^2$ et $R^3$ ont une signification selon la formule (2) et peuvent être identiques ou différents, $R^5$ représente H ou a la même signification que $R^2$ ou $R^3$ , et/ou par des chaînons pontants réticulants
$SiO_{4/2}$, $R'SiO_{3/2}$, $R_2'SiO_{2/2}$
$TiO_{4/2}$, $R'TiO_{3/2}$, $R_2'TiO_{2/2}$
$AlO_{3/2}$, $R'AlO_{2/2}$
R' représentant un groupe méthyle ou éthyle, et le rapport des atomes de silicium dans la formule (1) et la formule (3) aux atomes pontants silicium, titane, aluminium, allant de 1 : 0 à 1 : 10.

**2.** Organopolysiloxanes contenant des groupes acyle-thiourée selon la revendication 1, caractérisés en ce que $R^4$ est un groupe alkylène linéaire ou ramifié.

**3.** Organopolysiloxanes contenant des groupes acyle-thiourée selon la revendication 1 ou 2, caractérisés en ce que la formule (1) représente des motifs

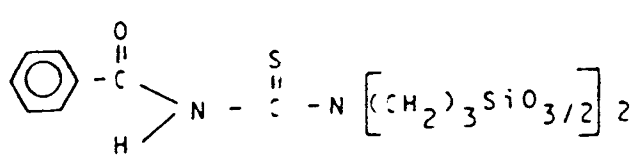

**4.** Polysiloxanes contenant des groupes acyle-thiourée selon l'une quelconque des revendications 1 à 3, caractérisés en ce que le rapport molaire des motifs de formule (1) aux motifs de formule (3) peut aller de 1 : 0 à 1 : 9.

**5.** Procédé pour la préparation des composés de l'invention selon l'une quelconque des revendications 1 à 4, caractérisé en ce que l'on fait réagir une organosiloxanamine, constituée de motifs de formule

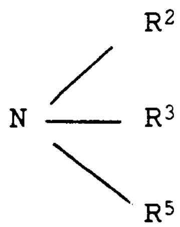

(3)

dans laquelle $R^2$ et $R^3$ représentent des motifs de formule (2), ont le même ensemble de significations que dans la formule (2) et peuvent être identiques ou différents,
$R^5$ représente H, éventuellement en présence de motifs de formule (3) dans lesquels $R^5$ peut avoir la même signification que $R^2$ et $R^3$, avec un isothiocyanate de formule

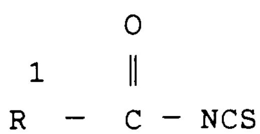

(4)

dans laquelle $R^1$ représente un groupe phényle ou un groupe phényle substitué par un radical $NO_2$, ou un groupe alkyle ayant de 1 à 3 atomes de carbone, en présence d'un solvant organique, à la température ambiante ou au-dessus de la température ambiante, jusqu'à une température de 200 °C, à la pression normale ou sous une surpression, qui correspond à la somme des pressions partielles à la température respective, et on sépare de la phase liquide le polysiloxane contenant des groupes acyle-thiourée, on le lave avec un solvant approprié, puis on le sèche à une température allant de la température ambiante à 200 °C, à l'air ou sous une atmosphère d'un gaz inerte, ou sous vide.

**6.** Procédé selon la revendication 5, caractérisé en ce que, dans la réaction avec l'isothiocyanate de formule (4), on utilise en tant que solvant des alcools inférieurs ayant de 1 à 5 atomes de carbone, ou l'acétone.

**7.** Procédé selon la revendication 5, caractérisé en ce que l'on fait réagir une organosiloxanamine polymère constituée de motifs de formule (3), avec un chlorure d'acyle de formule

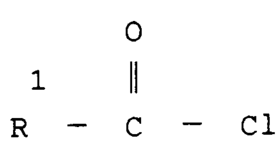

(5)

dans laquelle $R^1$ a la même signification que dans la formule (4), et avec du sulfocyanure de lithium, sodium, potassium ou ammonium.

**8.** Procédé selon la revendication 7, caractérisé en ce que dans la réaction, on utilise, en tant que solvant, l'acétone.

**9.** Procédé pour la préparation des composés de l'invention selon les revendications 1 à 4, caractérisé en ce que l'on hydrolyse avec une quantité d'eau au moins stoechiométrique ou en excès, et on polycondense un silane contenant des groupes acyle-thiourée, de formule

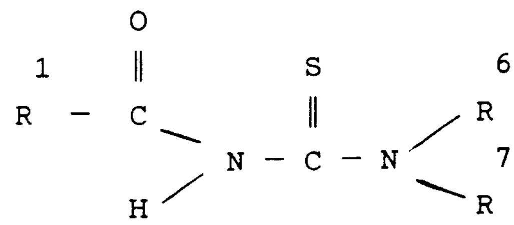

(6)

dans laquelle $R^1$ a le même ensemble de significations que dans la formule (1), $R^6$ et $R^7$ représentent des motifs de formule

$R^4$ - $Si(OR)_3$ (7)

et peuvent être identiques ou différents, $R^4$ ayant le même ensemble de significations que dans la formule (2), R représentant un radical alkyle linéaire ou ramifié ayant de 1 à 3 atomes de carbone, éventuellement en présence d'un aminosilane secondaire et/ou tertiaire de formule

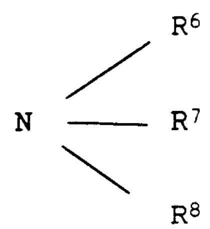

(8)

dans laquelle $R^6$ et $R^7$ ont le même ensemble de significations que dans la formule (6) et peuvent être identiques ou différents, $R^8$ représente H et/ou a la même signification que $R^6$ ou $R^7$, et/ou éventuellement en présence d'un précurseur d'agent de réticulation, de formule générale

$$MeR''_{2-4}R'_{0-2} \quad \text{ou} \quad MeR''_{2-3}R'_{0-1}$$

Me étant Si, Ti ou Al, R'' représentant un radical alcoxy linéaire ou ramifié ayant de 1 à 5 atomes de carbone ou l'ion chlorure, et R' représentant le groupe méthyle ou éthyle, éventuellement après addition d'un solvant ; on sépare le produit de la phase liquide, éventuellement après addition d'un autre solvant, éventuellement on le lave, puis on le sèche sous une atmosphère d'un gaz inerte ou à l'air, ou sous vide, à une température allant jusqu'à 200 °C, pendant une durée de 1 heure à plusieurs jours.

**10.** Procédé selon la revendication 9, caractérisé en ce que l'on utilise en tant que solvant des alcools linéaires ou ramifiés ayant de 1 à 3 atomes de carbone.

**11.** Utilisation des organopolysiloxanes contenant des groupes acyle-thiourée, pour la séparation de métaux dissous à partir de solutions aqueuses et de solutions organiques.